# EUROPÄISCHE PATENTSCHRIFT

(11) **EP 2 949 961 B1**
(45) Veröffentlichungstag und Bekanntmachung des Hinweises auf die Patenterteilung: **10.01.2018**
(21) Anmeldenummer: 15168615.1
(22) Anmeldetag: 21.05.2015
(51) Int. Cl.: F16F 7/09, F16F 7/08, F16F 13/00

(54) **BEWEGUNGSDÄMPFUNGSEINHEIT UND FEDEREINHEIT MIT EINER DERARTIGEN BEWEGUNGSDÄMPFUNGSEINHEIT**
MOVEMENT DAMPING UNIT AND SPRING UNIT WITH SUCH A MOVEMENT DAMPING UNIT
UNITÉ D'AMORTISSEMENT DE MOUVEMENT ET UNITÉ À RESSORTS DOTÉE D'UNE TELLE UNITÉ D'AMORTISSEMENT DE MOUVEMENT

(30) Priorität: 26.05.2014 DE 102014210001
(43) Veröffentlichungstag der Anmeldung: 02.12.2015
(73) Patentinhaber: Stabilus GmbH, 56070 Koblenz (DE)
(72) Erfinder: Löhken , Lars, 53545 Linz am Rhein (DE); Probst, Ulrich, 56204 Hillscheid (DE); Ulrich, Christoph, 56283 Kratzenburg (DE); Müller, Markus, 56072 Koblenz (DE); Burrell, Joshua, 56068 Koblenz (DE)
(74) Vertreter: Herzog, Markus

(56) Entgegenhaltungen:
- WO-A1-2013/112621
- DE-A1- 2 450 061
- DE-A1- 2 540 648
- US-A- 5 884 734

## Beschreibung

Die Erfindung betrifft eine Bewegungsdämpfungseinheit, umfassend ein Aufnahmerohr mit einer Längsachse, eine in dem Aufnahmerohr aufgenommene Relativbewegungseinheit, welche relativ zu dem Aufnahmerohr im Wesentlichen in Richtung der Längsachse hin und her verlagerbar ist, und eine zwischen dem Aufnahmerohr und der Relativbewegungseinheit wirkende Reibeinrichtung.

Derartige Bewegungsdämpfungseinheiten werden beispielsweise bei Vorrichtungen mit zwei Teilen, die relativ zueinander zwischen einer ersten Extremstellung und einer zweiten Extremstellung hin und her bewegbar sind, als Endlagendämpfer eingesetzt, um beim Erreichen einer der beiden Extremstellungen mittels der Reibeinrichtung ein allzu abruptes Abbremsen der Relativbewegung der beiden Teile zu vermeiden und die hiervon ausgehende Gefahr einer Beschädigung der Vorrichtung sowie die hiermit einhergehende Geräuschentwicklung zu reduzieren, wenn nicht gar vollständig zu vermeiden. Solche Bewegungsdämpfungseinheiten werden beispielsweise bei Klappen oder/und Deckel von Kraftfahrzeugen, beispielsweise Heckklappen oder/und Kofferraumdeckel, aber auch bei Schiebetüren eingesetzt, welche zwischen einer geschlossenen Stellung (erste Extremstellung) und einer geöffneten Stellung (zweite Extremstellung) verstellbar sind. Dies gilt nicht nur für die gattungsgemäßen, sondern auch für die erfindungsgemäßen Bewegungsdämpfungseinheiten.

Ein Problem bekannter Bewegungsdämpfungseinheiten besteht darin, dass die Reibeinrichtung nicht nur bei der Annäherung an die beiden Extremstellungen wirksam ist, was erwünscht ist, sondern auch dann, wenn sich die beiden Teile - im vorliegenden Fall das Aufnahmerohr und die Relativbewegungseinheit - wieder aus der Extremstellung heraus in Richtung auf die andere Extremstellung zu bewegen.

Ferner sind aus der DE 24 50 061 und der DE 25 40 648 Dämpfungseinheiten bekannt, in denen jeweils in einem Aufnahmerohr eine Relativbewegungseinheit aufgenommen ist, die relativ zu dem Aufnahmerohr bewegbar ist, wobei zwischen dem Aufnahmerohr und der Relativbewegungseinheit eine Reibeinrichtung mit einem Schaltelement vorgesehen ist, wobei das Schaltelement die Reibeinrichtung bei Bewegung der Relativbewegungseinheit gegen das Aufnahmerohr radial aufweitet.

Der Vollständigkeit halber sei zudem auf die US 5,884,734 und die WO 2013/112621 A1 verwiesen.

Es ist daher Aufgabe der vorliegenden Erfindung, eine Bewegungsdämpfungseinheit der gattungsgemäßen Art derart weiterzubilden, dass die Reibeinrichtung dann, wenn sich das Aufnahmerohr und die Relativbewegungseinheit relativ zueinander wieder aus der Extremstellung heraus in Richtung auf die andere Extremstellung zu bewegen, mit einer geringeren Dämpfungskraft wirkt als bei der Annäherung an die jeweilige Extremstellung.

Diese Aufgabe wird erfindungsgemäß durch eine Bewegungsdämpfungseinheit der eingangs genannten Art gelöst, bei welcher die Reibeinrichtung wenigstens ein Schaltelement umfasst, das der Relativbewegungseinheit zugeordnet ist und einen sich in Richtung der Längsachse radial aufweitend ausgebildeten Eingriffsabschnitt aufweist, wobei jedem Schaltelement wenigstens ein elastisch komprimierbares Reibelement mit einer zum Eingriff mit dem Eingriffsabschnitt bestimmten Ausnehmung zugeordnet ist, das auf der Längsseite geringeren Durchmessers des Schaltelements angeordnet ist.

Aus Gründen der einfacheren Darstellung wird im Rahmen der nachstehenden Diskussion der vorliegenden Erfindung bezüglich der Relativbewegung zwischen Aufnahmerohr und Relativbewegungseinheit ein bezüglich des Aufnahmerohrs ruhendes Koordinatensystem unterstellt, so dass die gesamte Relativbewegung zwischen Aufnahmerohr und Relativbewegungseinheit von einer Bewegung der Relativbewegungseinheit herrührt.

Bei der Annäherung der Relativbewegungseinheit an die jeweils betrachtete Extremstellung bewegt sich das Schaltelement mit seinem Eingriffsabschnitt in die Ausnehmung des komprimierbaren Reibelements hinein, weitet es dadurch auf und drückt es nach außen gegen die Innenumfangsfläche des Aufnahmerohrs, wodurch eine die Bewegung der Relativbewegungseinheit dämpfende Reibkraft zwischen dem von der Relativbewegungseinheit mitgeführten Reibelement und dem Aufnahmerohr erzeugt wird. Grundsätzlich ist es zwar vorteilhaft, wenn das Reibelement mit dem Aufnahmerohr schon in gewissem Maße reibschlüssig zusammenwirkt, bevor der Eingriffsabschnitt des Schaltelements in die Ausnehmung des Reibelements eingreift. Hierdurch kann zum einen eine gewisse Führung der Relativbewegungseinheit in dem Aufnahmerohr bereitgestellt werden, was beispielsweise die Reduzierung oder gar Vermeidung einer Geräuschentwicklung infolge der Relativbewegung von Aufnahmerohr und Relativbewegungseinheit erleichtert. Zum anderen kann hierdurch aber auch der Eintritt des Eingriffsabschnitt in die Ausnehmung erleichtert werden. In diesem Zusammenhang ist es bei einer besonders schnellen Relativbewegung von Aufnahmerohr und Relativbewegungseinheit jedoch auch denkbar, dass das Reibelement aufgrund seiner Massenträgheit anfänglich noch in Ruhe verharrt, wenn das Schaltelement auf das Reibelement trifft, und das Reibelement erst hierdurch so weit aufgeweitet wird, dass es mit dem Aufnahmerohr in reibschlüssigen Eingriff tritt und somit der Mitnahme durch das Schaltelement so viel Widerstand entgegensetzt, dass der Eingriffsabschnitt tiefer in die Ausnehmung eindringen kann.

Wird die Relativbewegungseinheit aus der so erreichten Extremstellung wieder herausbewegt, so wird infolge des reibschlüssigen Eingriffs von Reibelement und Aufnahmerohr der Eingriffsabschnitt des Schaltelements aus der Ausnehmung des Reibelements herausgezogen. Hierdurch kann sich das Reibelement aufgrund seiner Eigenelastizität wieder nach radial innen ausdehnen, wodurch seine Anpressung gegen die Innenumfangsfläche des Aufnahmerohrs und somit die insgesamt erzeugte Dämpfkraft abnimmt. Der Bewegung aus der Extremstellung heraus wird daher weniger Dämpfkraft entgegengesetzt als der Bewegung in die Extremstellung hinein.

Da die die Annäherung an die Extremstellungen dämpfende Kraft nicht auf dem gesamten Weg der Relativbewegung von Aufnahmerohr und Relativbewegungseinheit wirksam sein soll, weißt das Aufnahmerohr einen ersten Längenabschnitt und einen zweiten Längenabschnitt aufweist, wobei der Innendurchmesser des ersten Längenabschnitts größer ist als der Innendurchmesser des zweiten Längenabschnitts. In dem ersten Führungsabschnitt wird aufgrund dessen größeren Durchmessers und der hieraus resultierenden geringeren, wenn überhaupt vorhandenen Komprimierung des Reibelements auf jeden Fall eine geringere, wenn überhaupt vorhandene Reibungskraft zwischen Reibelement und Aufnahmerohr erzeugt als in dem zweiten Führungsabschnitt. Der Übergang zwischen dem ersten Längenabschnitt und dem zweiten Längenabschnitt des Aufnahmerohrs kann beispielsweise konisch ausgebildet sein. Ferner ist es grundsätzlich denkbar, mehr als zwei Längenabschnitte unterschiedlichen Durchmessers vorzusehen.

Ist der Innendurchmesser des ersten Längenabschnitts des Aufnahmerohrs größer als der Außendurchmesser des Reibelement bzw. wenigstens eines Reibelements in dessen nicht komprimiertem Zustand und der Innendurchmesser des zweiten Längenabschnitts des Aufnahmerohrs kleiner als der Außendurchmesser des Reibelement bzw. wenigstens eines Reibelements in dessen nicht komprimiertem Zustand, so steht das Reibelement dann, wenn es sich im Bereich des ersten Längenabschnitts befindet, mit der Innenumfangsfläche des Aufnahmerohrs nicht in reibschlüssigem Eingriff, so dass die Relativbewegung von Aufnahmerohr und Relativbewegungseinheit im Wesentlichen ungedämpft ablaufen kann.

Um sicherstellen zu können, dass das Reibelement dann, wenn sich die Relativbewegungseinheit wieder aus der Extremstellung herausbewegt, nicht in der Extremstellung verharrt, und somit aus dem Wirkungsbereich des Schaltelements herausbewegt, wird in Weiterbildung der Erfindung vorgeschlagen, dass dem Schaltelement dessen den geringeren Durchmesser aufweisenden Längsende benachbart ein Anschlagelement zugeordnet ist. Das Anschlagelement hat die Aufgabe, das Reibelement dann, wenn sich das Schaltelement soweit von ihm entfernt hat, dass sich der Eingriffsabschnitt des Schaltelements außer Eingriff mit der Ausnehmung des Reibelements befindet, bei der weiteren gemeinsamen Bewegung von Schaltelement und Relativbewegungseinheit mitzunehmen, so dass es im Wirkungsbereich des Schaltelements verbleibt.

Vorteilhafterweise kann vorgesehen sein, dass das Schaltelement und das Anschlagelement als gesonderte Bauteile ausgebildet sind.

Ferner kann vorgesehen sein, dass das Schaltelement an seinem den geringeren Durchmesser aufweisenden Längsende mit einem Lagerabschnitt versehen ist, auf welchem das wenigstens eine dem Schaltelement zugeordnete Reibelement relativ zum Schaltelement in Richtung der Längsachse verlagerbar gelagert ist. Der Lagerabschnitt dient dabei als Distanzstück zwischen dem Eingriffsabschnitt des Schaltelements und dem Anschlagelement. Die Länge des Lagerabschnitts ist dabei vorzugsweise derart bemessen, dass einerseits bei der Bewegung aus der Extremstellung heraus ein vollständiges Außer-Eingriff-Treten des Eingriffsabschnitts des Schaltelements mit der Ausnehmung des Reibelements möglich ist, und andererseits bei der Annäherung an die Extremstellung ein rascher Eingriff des Eingriffsabschnitts des Schaltelements in die Ausnehmung des Reibelements möglich ist.

Vorteilhafterweise kann vorgesehen sein, dass das Schaltelement und der Lagerabschnitt einstückig ausgebildet sind.

Um verhindern zu können, dass sich das wenigstens eine Reibelement an dem den größeren Durchmesser aufweisenden Längsende des Schaltelements aus dem Wirkungsbereich des Schaltelements herausbewegt, wird vorgeschlagen, dass das Schaltelement an seinem den größeren Durchmesser aufweisenden Längsende mit einer Ringschulter versehen ist. Der Außendurchmesser dieser Ringschulter kann vorteilhafterweise kleiner sein als der Innendurchmesser des zweiten Längenabschnitts des Aufnahmerohrs. Bei einer Hintereinanderanordnung mehrerer Schaltelemente kann bezogen auf zwei einander unmittelbar benachbarte Schaltelemente die Ringschulter des einen Schaltelements das Anschlagselement des jeweils anderen Schaltelements bilden. Die Ringschulter und das Schaltelement sind vorzugsweise miteinander einstückig ausgebildet.

In Weiterbildung der Erfindung wird vorgeschlagen, dass das wenigstens eine Schaltelement mit der Relativbewegungseinheit betriebsfest verbunden ist. Diese Ausgestaltung hat den Vorteil der Reduzierung, wenn nicht gar vollständigen Vermeidung von Geräuschen, welche dann, wenn das wenigstens eine Schaltelement in Richtung der Längsachse in gewissen Maße relativ zur Relativbewegungseinheit bewegbar wäre, bei Änderung der Bewegungsrichtung der Relativbewegungseinheit beim Aufeinandertreffen von Schaltelement und Relativbewegungseinheit unweigerlich entstehen würden. Darüber hinaus können hierdurch reproduzierbare Reibungsverhältnisse und somit eine reproduzierbare Funktion der Bewegungsdämpfungseinheit sichergestellt werden.

Beispielsweise kann das wenigstens eine Schaltelement auf die Relativbewegungseinheit aufgeschraubt sein. Es ist aber auch denkbar, das wenigstens eine Schaltelement, und gegebenenfalls auch den Lagerabschnitt oder/und das Anschlagelement, auf einen ersten Längenabschnitt der Relativbewegungseinheit aufzuschieben, bis es an einer Schulter zur Anlage kommt, die zwischen dem ersten Längenabschnitt der Relativbewegungseinheit und einem zweiten Längenabschnitt der Relativbewegungseinheit ausgebildet ist, der einen größeren Druchmesser aufweist als der erste Längenabschnitt. Nach dem, vorzugsweise im wenseltichen spielfreien, Aufschieben kann das wenigstens eine Schaltelement zwischen der Anlageschulter und einem Sicherungselement, beispielsweise einer Sicherungsmutter, einem Sicherungssplint, einer Sicherungsklammer oder dergleichen, festgespannt werden. Eine Verdrehung des wenigstens einen Schaltelements um die Relativbewegungseinheit herum kann durch eine Keilverzahnung zwischen Schaltelement und Relativbewegungseinheit verhindert werden. Schließlich kommt auch noch eine stoffschlüssige Verbindung zwischen dem wenigstens einen Schaltelement und der Relativbewegungseinheit in Betracht, beispielsweise durch Verkleben, Verlöten, Verschweißen oder dergleichen.

In Weiterbildung der Erfindung wird vorgeschlagen, dass der Eingriffsabschnitt des Schaltelements einen ersten Längenabschnitt aufweisen kann, in dem sich der Eingriffsabschnitt radial aufweitet, sowie einen an das aufgeweitete Ende des ersten Längenabschnitts unmittelbar anschließenden, vorzugsweise im Wesentlichen zylindrisch ausgebildeten, zweiten Längenabschnitt. In diesem Fall ist vorteilhaft, wenn die Länge des radialen Abschnitts des Schaltelements und die Wahl der Materialien von Aufnahmerohr und Schaltelement derart aufeinander abgestimmt sind, dass die Haftreibungskraft zwischen Schaltelement und Reibelement kleiner ist als die Haftreibungskraft zwischen Aufnahmerohr und Reibelement. Hierdurch kann sichergestellt werden, dass sich das Reibelement bei der Bewegung aus der Extremstellung heraus wieder von dem Schaltelement lösen kann.

Die radiale Aufweitung des Eingriffsabschnitts kann beispielsweise in Form einer konischen Aufweitung ausgebildet sein. Insbesondere dann, wenn der Eingriffsabschnitt, wie vorstehend erläutert, einen sich radial aufweitenden Längenabschnitt und einen, vorzugsweise zylindrisch ausgebildeten, Längenabschnitt aufweist, kann es vorteilhaft sein, wenn die radiale Aufweitung zumindest im Übergang zwischen den beiden Längenabschnitten gerundet verläuft. Der Vorteil dieser Weiterbildung liegt beispielsweise in der verglichen mit einem scharfkantigen Übergang geringeren mechanischen Beanspruchung und damit geringerem Verschleiß des Reibelements.

Die Ausnehmung des Reibelements kann beispielsweise als im Wesentlichen zylindrische Ausnehmung ausgebildet sein. Diese Ausbildung kann etwa dann bevorzugt sein, wenn vor der eigentlichen Endlagendämpfung ein allmähliches Abbremsen der Relativbewegung von Aufnahmerohr und Relativbewegungseinheit erwünscht ist. Der Eingriffsabschnitt tritt in diesem Fall bei seinem Eindringen in die Ausnehmung nämlich nur nach und nach mit der Innenumfangsfläche der Ausnehmung in Eingriff. Ist hingegen ein kurzer Schaltweg erwünscht, so ist es vorteilhaft, wenn die Ausnehmung des Reibelements an die Gestalt der radialen Aufweitung des Eingriffsabschnitt angepasst ausgebildet ist, da in diesem Fall das Eingriffselement mit der gesamten Innenumfangsfläche der Ausnehmung nahezu gleichzeitig in Eingriff tritt. In konstruktiv einfacher Weise können sowohl die radiale Aufweitung des Eingriffsabschnitts als auch die Ausnehmung des Reibelements im Wesentlichen konisch ausgebildet sein.

Zur Ermöglichung eines möglichst abrupten Schaltens kann zusätzlich oder alternativ vorgesehen sein, dass am Übergang zwischen den beiden Längenabschnitten des Eingriffselements oder/und diesem Übergang benachbart wenigstens ein nach radial außen abstehender Vorsprung vorgesehen ist oder/und dass am Übergang zwischen den beiden Längenabschnitten des Aufnahmerohrs oder/und diesem Übergang benachbart wenigstens ein nach radial innen abstehender Vorsprung vorgesehen ist. An beiden Stellen kann bereits ein Vorsprung, dessen Abmessung in radialer Richtung lediglich etwa 0,2 bis 0,3 mm beträgt, einen deutlichen Einfluss auf das Schaltverhalten der erfindungsgemäßen Bewegungsdämpfungseinheit ausüben.

Um nach Erreichen der Extremstellung in dieser Extremstellung eine Haltefunktion für die Bewegungsdämpfungseinheit bereitstellen zu können, wird vorgeschlagen, dass entweder die Relativbewegungseinheit an dem Aufnahmerohr dem vom ersten Längenabschnitt abgewandten Ende des zweiten Längenabschnitts des Aufnahmerohrs benachbart formschlüssig gehalten ist oder dass sich an das vom ersten Längenabschnitt abgewandte Ende des zweiten Längenabschnitts des Aufnahmerohrs ein dritter Längenabschnitt des Aufnahmerohrs anschließt, wobei die Relativbewegungseinheit in diesem dritten Längenabschnitt des Aufnahmerohrs reibschlüssig gehalten ist.

Der formschlüssige Halt kann beispielsweise durch einen Mechanismus bereitgestellt werden, wie er beispielsweise von Kugelschreibern her zum Ein- und Ausfahren der Schreibspitze bekannt ist, also einen Mechanismus, bei dem durch eine Bewegung der Relativbewegungseinheit über eine vorbestimmte Relativlage bezüglich des Aufnahmerohrs hinaus, beispielsweise gegen eine Federkraft, ein Formschluss zwischen Relativbewegungseinheit und Aufnahmerohr herbeigeführt wird, während dieser Formschluss durch eine erneute Bewegung der Relativbewegungseinheit über die vorbestimmte Relativlage bezüglich des Aufnahmerohrs hinaus der Formschluss wieder aufgehoben wird.

Demgegenüber kann der reibschlüssige Halt beispielsweise durch Ausbildung des dritten Längenabschnitts des Aufnahmerohrs mit einem Morsekegel und eine hieran angepasste Gestalt des Endes der Relativbewegungseinheit erzielt werden. Es ist jedoch auch möglich, dass der Innendurchmesser des dritten Längenabschnitts des Aufnahmerohrs kleiner ist als der Innendurchmesser des zweiten Längenabschnitts und die Reibkraft derart bemessen ist, dass sie größer ist als die gravitationsbedingt auf die Bewegungsdämpfungseinheit einwirkenden Kräfte. Ferner kann ein an der Relativbewegungseinheit in Längsrichtung unbeweglich angeordnetes Reibelement vorgesehen sein, das zum Eingriff mit dem dritten Längenabschnitt des Aufnahmerohrs bestimmt ist.

Nachzutragen ist, dass die Relativbewegungseinheit am Aufnahmerohr dessen Ende, aus dem die Relativbewegungseinheit aus dem Aufnahmerohr austritt, benachbart geführt sein kann. Dabei können das diese Führung bewerkstelligende Führungselement und die Relativbewegungseinheit in Umfangsrichtung unverdrehbar miteinander in Eingriff stehen, beispielsweise durch Vorsehen einer Keilverzahnung von Relativbewegungseinheit und Aufnahmerohr.

Nachzutragen ist ferner, dass an dem der betrachteten Extremstellung zugeordneten Ende des Aufnahmerohrs das Aufnahmerohr oder eine an diesem Ende vorgesehene Abschlusseinheit mit wenigstens einem, gewünschtenfalls mit einer Drossel oder/und einem Ventil versehenen, Entlüftungsdurchgang ausgebildet sein kann. Auch durch diese Maßnahme kann die Bewegung an die Extremstellung heran oder/und die Bewegung aus der Extremstellung heraus in der gewünschten Art und Weise oder/und in dem gewünschten Maße beeinflusst werden. Eine ungehinderte Annäherung an die betrachtete Extremstellung kann aber auch dadurch bereitgestellt werden, dass das Reibelement mit den Durchtritt von Gas, vorzugsweise Luft, ermöglichenden Durchgängen oder/und an seiner Außenumfangsfläche vorgesehenen Randeinkerbungen ausgebildet ist.

Nachzutragen ist weiterhin, dass das Aufnahmerohr oder/und die Relativbewegungseinheit oder/und das wenigstens eine Schaltelement aus einem starren Material, beispielsweise Metall oder Kunststoff, gebildet sein können, oder/und dass das wenigstens eine Reibelement aus einem komprimierbaren Material hergestellt sein kann, beispielsweise Gummi oder Schaumstoff.

Nachzutragen ist außerdem, dass es zur Verwirklichung einer erfindungsgemäß wirkenden Bewegungsdämpfung im Bereich beider Extremstellungen denkbar ist, zwei Schaltelement-Reibelement-Anordnungen bezüglich der Längsrichtung des Aufnahmerohrs zueinander invers anzuordnen. Hierdurch kann erreicht werden, dass bei Annäherung an die eine Extremstellung nur das Schaltelement und das Reibelement der einen Schaltelement-Reibelement-Anordnung miteinander in Eingriff treten, während das Schaltelement und das Reibelement der jeweils anderen Schaltelement-Reibelement-Anordnung außer Eingriff miteinander gehalten werden, wobei sich die Schaltelement-Reibelement-Anordnungen bei der Annäherung an die jeweils andere Extremstellung gerade umgekehrt verhalten.

Nachzutragen ist schließlich auch noch, dass die erfindungsgemäße Bewegungsdämpfungseinheit in einfacher Weise bei bereits bestehenden Vorrichtungen nachgerüstet werden kann. Ferner kann sie in einfacher Weise an den jeweiligen Anwendungsfall angepasst werden. Beispielsweise kann die Dämpfungskraft bei sonst gleichen Abmessungen durch eine Änderung des Außendurchmessers des Reibelement der/und des Durchmessers von dessen Ausnehmung oder/und der Länge des Reibelements variiert werden. Aber auch eine Änderung der Reibungskoeffizienten durch gezielte Materialwahl ist denkbar. Durch eine Hintereinanderanordnung einer Mehrzahl von Schaltelement-Reibelement-Kombinationen kann eine stufenweise Erhöhung der Dämpfkraft erzielt werden.

Nach einem weiteren Gesichtpunkt betrifft die Erfindung eine Federeinheit mit einer Bewegungsdämpfungseinheit gemäß wenigstens einer der vorstehend erläuterten Ausbildungsvarianten, bei welcher an demjenigen Ende des Aufnahmerohrs, das dem Ende des Aufnahmerohrs, an dem die Relativbewegungseinheit aus dem Aufnahmerohr austritt, entgegengesetzt ist, ein erstes Anschlusselement zur Verbindung mit einer ersten übergeordneten Baugruppe, beispielsweise mit einer Klappe eines Kraftfahrzeugs, vorgesehen ist, bei welcher an dem aus dem Aufnahmerohr herausragenden Ende der Relativbewegungseinheit ein zweites Anschlusselement zur Verbindung mit einer zweiten übergeordneten Baugruppe, beispielsweise mit einer Karosserie des Kraftfahrzeugs, vorgesehen ist, und bei welcher eine das Aufnahmerohr umgebende Feder vorgesehen ist, deren eines Ende mittelbar oder unmittelbar an dem ersten Anschlusselement abgestützt ist und deren eines Ende mittelbar oder unmittelbar an dem zweiten Anschlusselement abgestützt ist.

Die Erfindung wird im Folgenden anhand der beigefügten Zeichnung an Ausführungsbeispielen näher erläutert werden. Im Einzelnen:
- Figur 1: zeigt eine perspektivische Ansicht des Heckbereichs eines Kraftfahrzeugs, dessen Heckklappe mit erfindungsgemäßen Federelementen zur Unterstützung deren Verschwenkung ausgestattet ist;
- Figur 2: zeigt eine Schnittdarstellung einer ersten Ausführungsform eines erfindungsgemäßen Federelements;
- Figuren 3 und 4: zeigen Schnittdarstellungen zur Erläuterung der Funktion der Bewegungsdämpfungseinheit des erfindungsgemäßen Federelements; und
- Figur 5: zeigt eine Schnittdarstellung einer zweiten Ausführungsform eines erfindungsgemäßen Federelements.

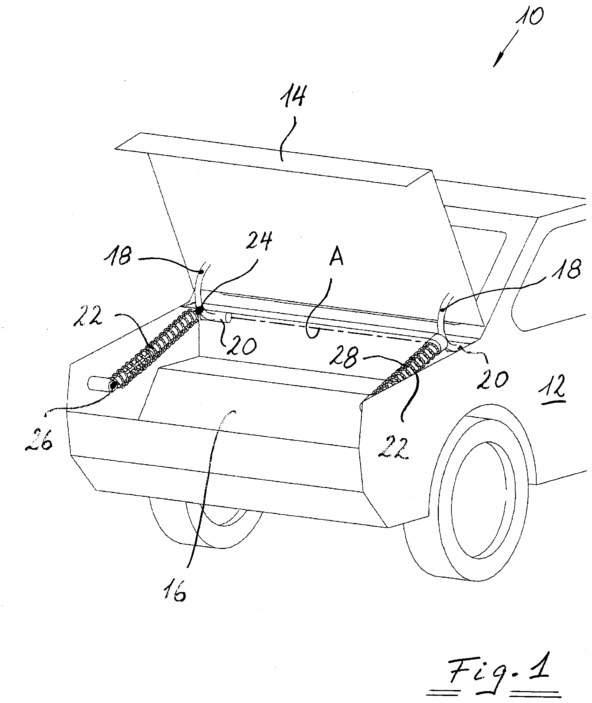

In Figur 1 ist ein Kraftfahrzeug 10 dargestellt mit einer Karosserie 12 und einer Heckklappe 14 zum Verschließen eines Kofferraums 16. Die Heckklappe 14 ist über zwei Schwenkbügel 18 und zwei Scharniere 20 an der Karosserie 12 um eine Schwenkachse A zwischen einer geöffneten Stellung (siehe Figur 1) und einer (nicht dargestellten) geschlossenen Stellung schwenkbar angelenkt.

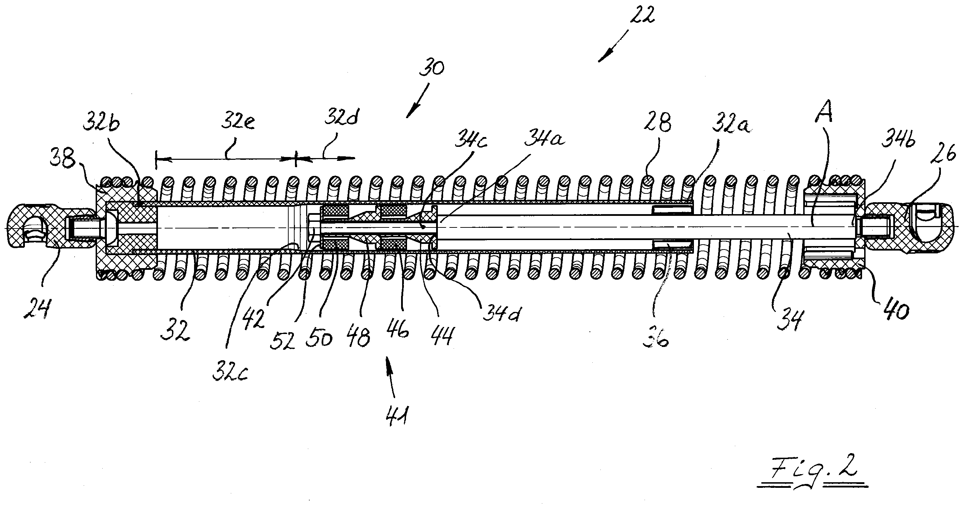

Ferner sind zwei Federeinheiten 22 vorgesehen, von denen jede mittels eines Anschlusselements 24 an dem zugehörigen Schwenkbügel 18 angelenkt ist und mittels eines Anschlusselements 26 an der Karosserie 12 des Kraftfahrzeugs 10 angelenkt ist. Ferner umfassen beide Federeinheiten 22 eine Schraubenzugfeder 28. Zudem ist vorzugsweise wenigstens eine der Federeinheiten 22 mit einer Bewegungsdämpfungseinheit 30 ausgebildet, deren Aufbau und Funktion nachstehend mit Bezug auf die Figuren 2, 3 und 4 erläutert werden wird.

Die Bewegungsdämpfungseinheit 30 umfasst ein Aufnahmerohr 32 und eine als Relativbewegungseinheit dienende Stange 34, deren in Figur 2 linkes Ende 34a in dem Aufnahmerohr 32 aufgenommen ist und mittels eines Führungselements 36 in diesem hin und her verlagerbar geführt ist. Das Führungselement 36 ist an jenem Ende des Aufnahmerohrs 32 angeordnet, an welchem die Stange 34 aus dem Aufnahmerohr 32 heraustritt und das daher nachstehend als Austrittsende 32a des Aufnahmerohrs 32 bezeichnet wird. Das andere Ende 32b des Aufnahmerohrs 32 ist durch eine Abschlusskappe 38 verschlossen, welche das Anschlusselement 24 um die Längsachse A des Aufnahmerohrs 32 verdrehbar trägt. In analoger Weise ist an dem aus dem Aufnahmerohr 32 herausragenden Ende 34b der Stange 34 eine Abschlusskappe 40 angeordnet, das das Anschlusselement 26 um die Längsachse A des Aufnahmerohrs verdrehbar trägt. Die Feder 28 stützt sich einenends an der Abschlusskappe 38 und andernends an der Abschlusskappe 40 ab.

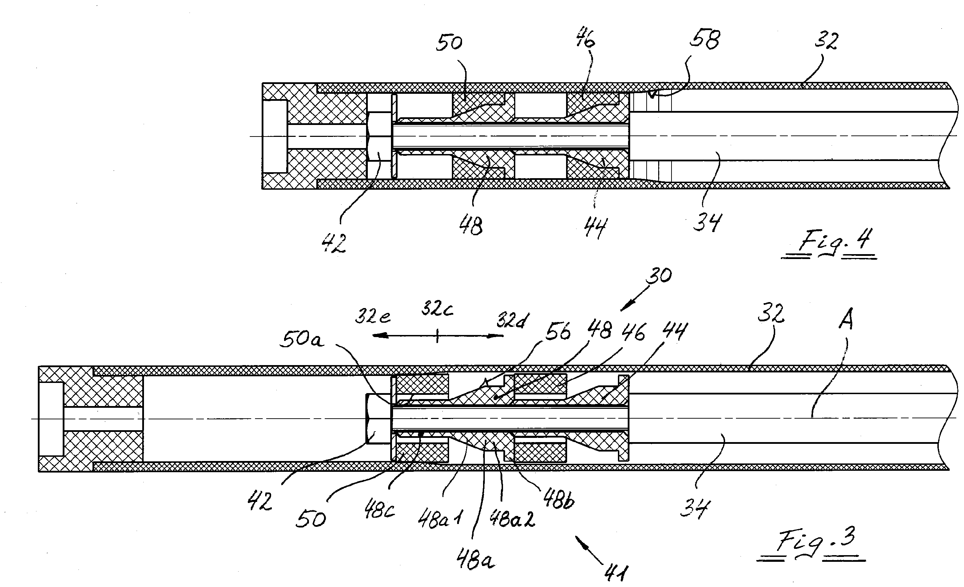

An ihrem in Figur 2 linken Ende 34a verfügt die Stange 34 über einen Längenabschnitt 34c, der einen geringeren Durchmesser aufweist als die restliche Stange 34 und somit mit dieser eine Anschlagschulter 34d bildet. Diesem Längenabschnitt 34c ist eine Reibeinrichtung 41 zugeordnet. Insbesondere sind auf diesen Längenabschnitt 34c nacheinander folgende die Reibeinrichtung 41 bildenden Elemente im Wesentlichen spielfrei aufgeschoben und mittels einer Sicherungsmutter 42 gegen die Anschlagschulter 34d verspannt: ein erstes Schaltelement 44, ein erstes Reibelement 46, ein zweites Schaltelement 48, ein zweites Reibelement 50 und eine Abschlussscheibe 52. Zur Bereitstellung der Bewegungsdämpfungsfunktion wirken diese Elemente miteinander und mit dem Übergang 32c zwischen einem ersten Längenabschnitt 32d des Aufnahmerohrs 32, der sich bis zum Ende 32a des Aufnahmerohrs 32 erstreckt, und einem zweiten Längenabschnitt 32e des Aufnahmerohrs 32 in der nachstehend mit Bezug auf die Figuren 3 und 4 erläuterten Weise zusammen.

In dem in den Figuren 2, 3 und 4 dargestellten Ausführungsbeispiel sind die beiden Schaltelemente 44 und 48 und die beiden Reibelemente 46 und 50 jeweils identisch ausgebildet. Daher wird der Aufbau und das Zusammenwirken lediglich anhand des Schaltelements 48 und des Reibelements 50 beschrieben werden, auf deren Erläuterung auch bezüglich des Schaltelements 44 und des Reibelements 46 Bezug genommen werden kann.

Das Schaltelement 48 ist aus einem im Wesentlichen starren Material gefertigt, beispielsweise aus Kunststoff, vorzugsweise als Spritzgussteil, und umfasst einen sich radial aufweitenden Abschnitt 48a, eine mit diesem einstückig ausgebildete Ringschulter 48b und einen mit beiden einstückig ausgebildeten Lagerabschnitt 48c. Dabei ist der Abschnitt 48a in zwei Längenabschnitte 48a1 und 48a2 unterteilt, wobei die radiale Aufweitung in dem ersten Längenabschnitt 48a1 verwirklicht ist, während der zweite Längenabschnitt 48a2 im Wesentlichen zylindrisch ausgebildet ist. Der Außendurchmesser der Ringschulter 48b ist kleiner als der Innendurchmesser beider Längenabschnitte 32d und 32e des Aufnahmerohrs 32.

Demgegenüber ist das Reibelement 50 aus einem elastisch komprimierbaren Material gefertigt, beispielsweise Gummi oder Schaumstoff. Es verfügt über eine vorzugsweise zylindrische Gestalt und ist mit einer zentralen Ausnehmung 50a versehen, deren Innendurchmesser größer ist als der Außendurchmesser des Lagerabschnitts 48c des Schaltelements 48, jedoch kleiner als der Außendurchmesser des zylindrischen Längenabschnitts 48a2 des Schaltelements 48. Ferner ist der Außendurchmesser des Reibelements 50 kleiner als der Innendurchmesser des ersten Längenabschnitts 32d des Aufnahmerohrs 32, jedoch größer als der Innendurchmesser des zweiten Längenabschnitts 32e des Aufnahmerohrs 32. Sämtliche das Reibelement 50 betreffenden Durchmesserangaben beziehen sich dabei auf einen vollständig unkomprimierten Zustand des Reibelements 50.

Befindet sich die Reibeinrichtung 41 im Bereich des ersten Längenabschnitts 32d des Aufnahmerohrs 32, so ist das Reibelement 50 um den Lagerabschnitt 48c des Schaltelements 48 herum angeordnet, ist nicht komprimiert und steht mit der Innenumfangsfläche des Aufnahmerohrs 32 allenfalls in losem Kontakt. Bewegt sich die Stange 34 mit der Reibeinrichtung 41 in Figur 3 nach links, so stößt das Reibelement 50 im Zuge dieser Bewegung gegen den Übergang 32c zwischen den Längenabschnitten 32d und 32e des Aufnahmerohrs 32 und wird von diesem aufgehalten. Bei der weiteren Bewegung der Stange 34 tritt der sich aufweitende Abschnitt 48a des Schaltelements 48 in die Ausnehmung 50a des Reibelements 50 ein. Hierdurch wird das Reibelement 50 zwischen dem Schaltelement 48 und der Innenumfangsfläche des zweiten Längenabschnitts 32e des Aufnahmerohrs 32 komprimiert. Dies führt zur Erzeugung von Reibungskräften zwischen dem Reibelement 50 und dem Aufnahmerohr 32, welche die weitere Bewegung der Stange 34 in Figur 3 nach links dämpfen. Diese Reibungskräfte nehmen zu, bis das Reibelement vollständig auf den Abschnitt 48a aufgeschoben ist (siehe Figur 4) und seitlich an der Ringschulter 48b anliegt, die den Verbleib des Reibelements 50 im Wirkungsbereich des Schaltelement 48 sichert.

Die Reibungskräfte zwischen dem Aufnahmerohr 32 und der Reibeinrichtung 41 nehmen weiter zu, wenn auch die Kombination von Schaltelement 44 und Reibelement 46 in den Längenabschnitt 32e des Aufnahmerohrs 32 eintritt (siehe Figur 4).

Gemäß Vorstehendem wird die Bewegung der Stange 34 in den Figuren 2, 3 und 4 nach links in die in Figur 4 dargestellte Extremstellung gedämpft.

Wird nun die Stange in den Figuren 2, 3 und 4 wieder nach rechts bewegt, also aus der in Figur 4 dargestellten Extremstellung heraus, so verharren die Reibelemente 46 und 50 zunächst in Reibeingriff mit dem Aufnahmerohr 32, während die Schaltelemente 44 und 48 aufgrund ihres formschlüssigen Zusammenhalts mit der Stange 34 nach rechts bewegt werden, also aus den Ausnehmungen der Reibelemente 46 und 50 herausgezogen werden. Hierdurch nimmt die Kompression der Reibelemente 46, 50 ab und damit einhergehend nimmt auch die Haftreibung zwischen den Reibelementen 46, 50 und dem Aufnahmerohr 32 ab. Schließlich befinden sich die Reibelemente 46, 50 wieder vollständig im Bereich der Lagerabschnitte der Schaltelemente 44, 48 und legen sich gegen die Abschlussscheibe 52 bzw. die Ringschulter 48b des anderen Schaltelements 48 (die für das Reibelement 46 die Funktion der Abschlussscheibe übernimmt), an und werden von diesen bei der weiteren Bewegung der Stange 34 in den Figuren 2, 3 und 4 nach rechts mitgenommen. Diese Mitnahme stellt sicher, dass die Reibelemente 46, 50 im Wirkungsbereich der Schaltelemente 44, 48 verbleiben.

Gemäß Vorstehendem wird die Bewegung der Stange 34 in den Figuren 2, 3 und 4 nach rechts aus der in Figur 4 dargestellten Extremstellung heraus weniger gedämpft als bei der Bewegung in die Extremstellung hinein.

Das Schaltverhalten kann beispielsweise dadurch abrupter gestaltet werden, dass am Übergang zwischen den beiden Längenabschnitten 48a1 und 48a2 des sich aufweitenden Abschnitts 48a des Schaltelements 48 wenigstens ein nach radial außen abstehender Vorsprung 56 (siehe Figur 3) oder/und am Übergang zwischen den beiden Längenabschnitten 32d und 32e des Aufnahmerohrs 32 wenigstens ein nach radial innen abstehender Vorsprung 58 (siehe Figur 4) vorgesehen ist, der von dem jeweiligen Reibelement 46, 50 überwunden werden muss. Der wenigstens eine Vorsprung 56 oder/und 58 kann als Ringrippe ausgebildet sein. Es ist jedoch auch möglich, einen Einzelvorsprung oder mehrere über den Umfang, vorzugsweise im Wesentlichen gleichmäßig, verteilte Einzelvorsprünge vorzusehen.

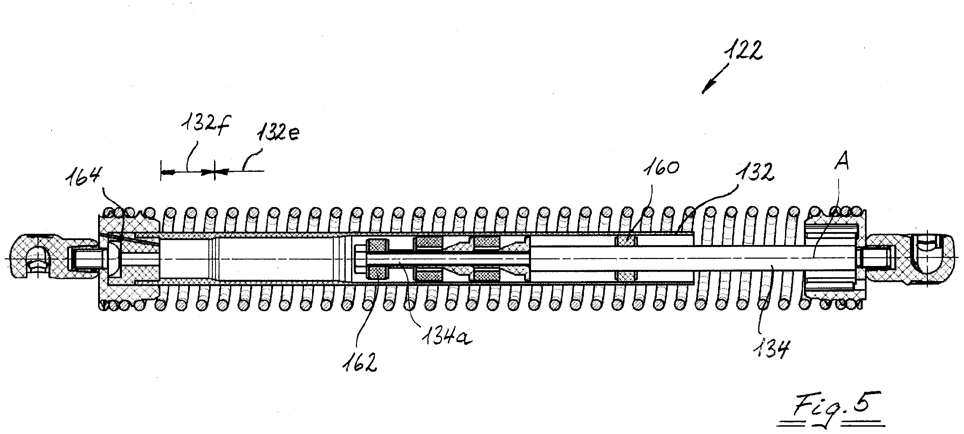

In Figur 5 ist eine zweite Ausführungform der erfindungsgemäßen Federeinheit dargestellt. Da sich die Ausführungsform der Figur 5 nur in wenigen Details von der Ausführungsform der Figuren 2, 3 und 4 unterscheidet, sind in Figur 5 analoge Teile mit den gleichen Bezugszeichen versehen, wie in den Figuren 2, 3 und 4, jedoch vermehrt um die Zahl 100. Darüber hinaus wird die Federeinheit 122 im Folgenden nur insoweit beschrieben, als sie sich von der Federeinheit 10 unterscheidet, auf deren Beschreibung hiermit ansonsten ausdrücklich verwiesen sei.

Ein erster Unterschied zwischen der Federeinheit 22 und der Federeinheit 122 besteht darin, dass mittels eines auf der Stange 134 fest angeordneten Reibungselements 160 während des gesamten Relativbewegungswegs von Aufnahmerohr 132 und Stange 134 eine vorbestimmte Grundreibung erzeugt wird.

Ein zweiter Unterschied zwischen der Federeinheit 22 und der Federeinheit 122 besteht darin, dass das Aufnahmerohr 132 einen dritten Längenabschnitt 132f aufweist, dessen Innendurchmesser noch kleiner ist als der Innendurchmesser des zweiten Längenabschnitts 132e, und dass dem Ende 134a der Stange 134 ein zwischen zwei mit der Stange betriebsfest verbundenen Scheiben in Längsrichtung A unverschiebbar eingespanntes Reibelement 162 zugeordnet ist, welches dann, wenn es mit dem dritten Längenabschnitt 132f in Reibeingriff getreten ist, eine Haftreibung erzeugt, die größer ist als die gravitationsbedingt auf die Federeinheit 122 einwirkenden Kräfte. Hierdurch kann eine Haltefunktion bereitgestellt werden, die die Federeinheit auch entgegen der gravitationsbedingt auf sie einwirkenden Kräfte in der Extremstellung hält, beispielsweise in der dem geöffneten Zustand der Heckklappe des Kraftfahrzeugs entsprechenden Stellung.

Ein dritter Unterschied zwischen der Federeinheit 22 und der Federeinheit 122 besteht in dem Vorsehen eines Entlüftungsdurchgangs 164, der eine übermäßige Kompression der nach dem Eintritt des Reibelements 162 in den dritten Längenabschnitt 132f zwischen diesem Reibelement 162 und dem Aufnahmerohr 132 eingeschlossenen Luft verhindert. Gewünschtenfalls kann dem Entlüftungsdurchgang 164 eine Drossel oder/und ein Ventil zugeordnet sein.

## Patentansprüche

1. Bewegungsdämpfungseinheit (30), umfassend:
• ein Aufnahmerohr (32) mit einer Längsachse (A),
• eine in dem Aufnahmerohr (32) aufgenommene Relativbewegungseinheit (34), welche relativ zu dem Aufnahmerohr (32) im Wesentlichen in Richtung der Längsachse (A) hin und her verlagerbar ist, und
• eine zwischen dem Aufnahmerohr (32) und der Relativbewegungseinheit (34) wirkende Reibeinrichtung (41),
wobei die Reibeinrichtung (41) wenigstens ein Schaltelement (44, 48) umfasst, das der Relativbewegungseinheit (34) zugeordnet ist und einen sich in Richtung der Längsachse (A) radial aufweitend ausgebildeten Eingriffsabschnitt (48a) aufweist, wobei jedem Schaltelement (44, 48) wenigstens ein elastisch komprimierbares Reibelement (46, 50) mit einer zum Eingriff mit dem Eingriffsabschnitt (48a) bestimmten Ausnehmung (50a) zugeordnet ist, das auf der Längsseite geringeren Durchmessers des Schaltelements (44, 48) angeordnet ist,
wobei
das Aufnahmerohr (32) einen ersten Längenabschnitt (32d) und einen zweiten Längenabschnitt (32e) umfasst, wobei der Innendurchmesser des ersten Längenabschnitts (32d) größer ist als der Innendurchmesser des zweiten Längenabschnitts (32e), **dadurch gekennzeichnet, dass** das wenigstens eine Reibelement (46, 50) zwischen dem ersten Längenabschnitt (32d) und dem zweiten Längenabschnitt (32e) beweglich ist.

2. Bewegungsdämpfungseinheit nach Anspruch 1, **dadurch gekennzeichnet, dass** der Innendurchmesser des ersten Längenabschnitts (32d) des Aufnahmerohrs (32) größer ist als der Außendurchmesser des Reibelements (46, 50) bzw. wenigstens eines Reibelements (46, 50) in dessen nicht komprimiertem Zustand und der Innendurchmesser des zweiten Längenabschnitts (32e) des Aufnahmerohrs (32) kleiner ist als der Außendurchmesser des Reibelements (46, 50) bzw. wenigstens eines Reibelements (46, 50) in dessen nicht komprimiertem Zustand.

3. Bewegungsdämpfungseinheit nach einem der Ansprüche 1 bis 2, **dadurch gekennzeichnet, dass** dem Schaltelement (44, 48) dessen den geringeren Durchmesser aufweisenden Längsende benachbart ein Anschlagelement (52) zugeordnet ist.

4. Bewegungsdämpfungseinheit nach Anspruch 3,
**dadurch gekennzeichnet, dass** das Schaltelement (48) und das Anschlagelement (52) als gesonderte Bauteile ausgebildet sind.

5. Bewegungsdämpfungseinheit nach einem der Ansprüche 1 bis 4, **dadurch gekennzeichnet, dass** das Schaltelement (48) an seinem den geringeren Durchmesser aufweisenden Längsende mit einem Lagerabschnitt (48c) versehen ist, auf welchem das wenigstens eine dem Schaltelement (48) zugeordnete Reibelement (50) relativ zum Schaltelement (48) in Richtung der Längsachse (A) verlagerbar gelagert ist.

6. Bewegungsdämpfungseinheit nach Anspruch 5,
**dadurch gekennzeichnet, dass** das Schaltelement (48) und der Lagerabschnitt (48c) einstückig ausgebildet sind.

7. Bewegungsdämpfungseinheit nach einem der Ansprüche 1 bis 6, **dadurch gekennzeichnet, dass** das Schaltelement (48) an seinem den größeren Durchmesser aufweisenden Längsende mit einer Ringschulter (48b) versehen ist.

8. Bewegungsdämpfungseinheit nach einem der Ansprüche 1 bis 7, **dadurch gekennzeichnet, dass** das wenigstens eine Schaltelement (44, 48) mit der Relativbewegungseinheit (34) betriebsfest verbunden ist.

9. Bewegungsdämpfungseinheit nach einem der Ansprüche 1 bis 8, **dadurch gekennzeichnet, dass** der Eingriffsabschnitt (48a) des Schaltelements (48) einen ersten Längenabschnitt (48a1) aufweist, in dem sich der Eingriffsabschnitt (48a) radial aufweitet, sowie einen an das aufgeweitete Ende des ersten Längenabschnitts (48a1) unmittelbar anschließenden, vorzugsweise im Wesentlichen zylindrisch ausgebildeten, zweiten Längenabschnitt (48a2).

10. Bewegungsdämpfungseinheit nach Anspruch 9,
**dadurch gekennzeichnet, dass** die radiale Aufweitung zumindest im Übergang zwischen den beiden Längenabschnitten (48a1, 48a2) gerundet verläuft.

11. Bewegungsdämpfungseinheit nach einem der Ansprüche 1 bis 10, **dadurch gekennzeichnet, dass** die Ausnehmung (50a) des Reibelements (50) als im Wesentlichen zylindrische Ausnehmung ausgebildet ist.

12. Bewegungsdämpfungseinheit nach einem der Ansprüche 1 bis 10, **dadurch gekennzeichnet, dass** die Ausnehmung des Reibelements an die Gestalt der radialen Aufweitung des Eingriffsabschnitt angepasst ausgebildet ist.

13. Bewegungsdämpfungseinheit nach einem der Ansprüche 1 bis 12, **dadurch gekennzeichnet, dass** entweder die Relativbewegungseinheit (34) an dem Aufnahmerohr (32) dem vom ersten Längenabschnitt (32d) abgewandten Ende des zweiten Längenabschnitts (32e) des Aufnahmerohrs (32) benachbart formschlüssig gehalten ist oder dass sich an das vom ersten Längenabschnitt (132d) abgewandte Ende des zweiten Längenabschnitts (132e) des Aufnahmerohrs (132) ein dritter Längenabschnitt (132f) des Aufnahmerohrs (132) anschließt, wobei die Relativbewegungseinheit (134) in diesem dritten Längenabschnitt (132f) des Aufnahmerohrs (132) reibschlüssig gehalten ist.

14. Federeinheit (22) mit einer Bewegungsdämpfungseinheit (30) nach einem der vorstehenden Ansprüche,
bei welcher an demjenigen Ende (32b) des Aufnahmerohrs (32), das dem Ende (32a) des Aufnahmerohrs (32), an dem die Relativbewegungseinheit (34) aus dem Aufnahmerohr (32) austritt, entgegengesetzt ist, ein erstes Anschlusselement (24) zur Verbindung mit einer ersten übergeordneten Baugruppe vorgesehen ist,
bei welcher an dem aus dem Aufnahmerohr (32) herausragenden Ende der Relativbewegungseinheit (34) ein zweites Anschlusselement (26) zur Verbindung mit einer zweiten übergeordneten Baugruppe vorgesehen ist, und
bei welcher eine das Aufnahmerohr (32) umgebende Feder (28) vorgesehen ist, deren eines Ende mittelbar oder unmittelbar an dem ersten Anschlusselement (24) abgestützt ist und deren eines Ende mittelbar oder unmittelbar an dem zweiten Anschlusselement (26) abgestützt ist.

## Claims

1. Movement-damping unit (30), comprising:
• a receiving tube (32) having a longitudinal axis (A),
• a relative movement unit (34) which is received in the receiving tube (32) and can move back and forth relative to the receiving tube (32) substantially in the direction of the longitudinal axis (A), and
• a friction device (41) acting between the receiving tube (32) and the relative movement unit (34),
the friction device (41) comprising at least one switching element (44, 48) that is assigned to the relative movement unit (34) and comprises an engagement portion (48a) formed so as to widen radially in the direction of the longitudinal axis (A), at least one resiliently compressible friction element (46, 50), which comprises a recess (50a) that is intended for engagement with the engagement portion (48a) and is arranged on the longitudinal face of smaller diameter of the switching element (44, 48), being assigned to each switching element (44, 48),
the receiving tube (32) comprising a first longitudinal portion (32d) and a second longitudinal portion (32e), the internal diameter of the first longitudinal portion (32d) being greater than the internal diameter of the second longitudinal portion (32e), **characterised in that** the at least one friction element (46, 50) can be moved between the first longitudinal portion (32d) and the second longitudinal portion (32e).

2. Movement-damping unit according to claim 1, **characterised in that** the internal diameter of the first longitudinal portion (32d) of the receiving tube (32) is greater than the external diameter of the friction element (46, 50) or of at least one friction element (46, 50) when it is not compressed, and the internal diameter of the second longitudinal portion (32e) of the receiving tube (32) is less than the external diameter of the friction element (46, 50) or of at least one friction element (46, 50) when it is not compressed.

3. Movement-damping unit according to either of claims 1 to 2, **characterised in that** a stop element (52) is assigned to the switching element (44, 48) so as to be adjacent to the longitudinal end thereof having a smaller diameter.

4. Movement-damping unit according to claim 3, **characterised in that** the switching element (48) and the stop element (52) are formed as separate components.

5. Movement-damping unit according to any of claims 1 to 4, **characterised in that** the switching element (48) is provided, on the longitudinal end thereof having a smaller diameter, with a bearing portion (48c), on which the at least one friction element (50) assigned to the switching element (48) is mounted so as to be movable relative to the switching element (48) in the direction of the longitudinal axis (A).

6. Movement-damping unit according to claim 5, **characterised in that** the switching element (48) and the bearing portion (48c) are integrally formed.

7. Movement-damping unit according to any of claims 1 to 6, **characterised in that** the switching element (48) is provided with an annular shoulder (48b) at the longitudinal end thereof having a larger diameter.

8. Movement-damping unit according to any of claims 1 to 7, **characterised in that** the at least one switching element (44, 48) is operatively rigidly connected to the relative movement unit (34).

9. Movement-damping unit according to any of claims 1 to 8, **characterised in that** the engagement portion (48a) of the switching element (48) comprises a first longitudinal portion (48a1), in which the engagement portion (48a) widens radially, and a second longitudinal portion (48a2), which is formed so as to be directly adjacent to the widened end of the first longitudinal portion (48a1) and is preferably substantially cylindrical.

10. Movement-damping unit according to claim 9, **characterised in that** the radial widening extends in a rounded manner at least at the transition between the two longitudinal portions (48a1, 48a2).

11. Movement-damping unit according to any of claims 1 to 10, **characterised in that** the recess (50a) in the friction element (50) is formed as a substantially cylindrical recess.

12. Movement-damping unit according to any of claims 1 to 10, **characterised in that** the recess in the friction element is adapted to the shape of the radial widening of the engagement portion.

13. Movement-damping unit according to any of claims 1 to 12, **characterised in that** either the relative movement unit (34) is held positively on the receiving tube (32) so as to be adjacent to the end of the second longitudinal portion (32e) of the receiving tube (32) remote from the first longitudinal portion (32d), or **in that** a third longitudinal portion (132f) of the receiving tube (132) is connected to the end of the second longitudinal portion (132e) of the receiving tube (32) remote from the first longitudinal portion (132d), the relative movement unit (134) being held in a friction fit in this third longitudinal portion (132f) of the receiving tube (132).

14. Spring unit (22) comprising a movement-damping unit (30) according to any of the preceding claims,
wherein a first connection element (24) for connection to a first superordinate assembly is provided at the end (32b) of the receiving tube (32) that is opposite the end (32a) of the receiving tube (32) at which the relative movement unit (34) emerges from the receiving tube (32),
wherein a second connection element (26) for connection to a second superordinate assembly is provided at the end of the relative movement unit (34) projecting out of the receiving tube (32), and
wherein a spring (28) surrounding the receiving tube (32) is provided of which one end is supported directly or indirectly on the first connection element (24) and the other end is supported directly or indirectly on the second connection element (26).

## Revendications

1. Unité d'amortissement de déplacement (30) comprenant :
- un tube de réception (32) avec un axe longitudinal (A),
- une unité de déplacement relatif (34) reçue dans le tube de réception (32), qui peut être transférée alternativement par rapport au tube de réception (32) sensiblement en direction de l'axe longitudinal (A), et
- un dispositif de friction (41) agissant entre le tube de réception (32) et l'unité de déplacement relatif (34),
dans laquelle le dispositif de friction (41) comporte au moins un élément de commutation (44, 48) qui est associé à l'unité de déplacement relatif (34) et présente une section de prise (48a) réalisée s'élargissant radialement en direction de l'axe longitudinal (A), dans laquelle à chaque élément de commutation (44, 48) est associé au moins un élément de friction (46, 50) comprimable élastiquement avec un évidement (50a) destiné à la prise avec la section de prise (48a), qui est agencé sur le côté longitudinal du plus petit diamètre de l'élément de commutation (44, 48),
dans laquelle le tube de réception (32) comporte une première section longitudinale (32d) et une deuxième section longitudinale (32e), dans laquelle le diamètre intérieur de la première section longitudinale (32d) est supérieur au diamètre intérieur de la deuxième section longitudinale (32e), **caractérisée en ce que** l'au moins un élément de friction (46, 50) est mobile entre la première section longitudinale (32d) et la deuxième section longitudinale (32e).

2. Unité d'amortissement de déplacement selon la revendication 1,
**caractérisée en ce que** le diamètre intérieur de la première section longitudinale (32d) du tube de réception (32) est supérieur au diamètre extérieur de l'élément de friction (46, 50) ou au moins d'un élément de friction (46, 50) dans son état non comprimé et le diamètre intérieur de la deuxième section longitudinale (32e) du tube de réception (32) est inférieur au diamètre extérieur de l'élément de friction (46, 50) ou au moins d'un élément de friction (46, 50) dans son état non comprimé.

3. Unité d'amortissement de déplacement selon l'une des revendications 1 à 2, **caractérisée en ce qu'**un élément de butée (52) est associé de manière contigüe à l'élément de commutation (44, 48) dont l'extrémité longitudinale présente le plus petit diamètre.

4. Unité d'amortissement de déplacement selon la revendication 3,
**caractérisée en ce que** l'élément de commutation (48) et l'élément de butée (52) sont réalisés comme des composants séparés.

5. Unité d'amortissement de déplacement selon l'une des revendications 1 à 4, **caractérisée en ce que** l'élément de commutation (48) est pourvu sur son extrémité longitudinale présentant le plus petit diamètre d'une section de palier (48c) sur laquelle l'au moins un élément de friction (50) associé à l'élément de commutation (48) est logé de manière déplaçable par rapport à l'élément de commutation (48) en direction de l'axe longitudinal (A).

6. Unité d'amortissement de déplacement selon la revendication 5,
**caractérisée en ce que** l'élément de commutation (48) et la section de palier (48c) sont réalisés d'un seul tenant.

7. Unité d'amortissement de déplacement selon l'une des revendications 1 à 6, **caractérisée en ce que** l'élément de commutation (48) est pourvu sur son extrémité longitudinale présentant le plus grand diamètre d'un épaulement annulaire (48b).

8. Unité d'amortissement de déplacement selon l'une des revendications 1 à 7, **caractérisée en ce que** l'au moins un élément de commutation (44, 48) est raccordé de manière à résister aux contraintes de fonctionnement à l'unité de déplacement relatif (34).

9. Unité d'amortissement de déplacement selon l'une des revendications 1 à 8, **caractérisée en ce que** la section de prise (48a) de l'élément de commutation (48) présente une première section longitudinale (48a1) dans laquelle la section de prise (48a) s'élargit radialement, ainsi qu'une deuxième section longitudinale (48a2) réalisée de préférence de manière sensiblement cylindrique, contigüe directement à l'extrémité élargie de la première section longitudinale (48a1).

10. Unité d'amortissement de déplacement selon la revendication 9,
**caractérisée en ce que** l'élargissement radial s'étend de manière arrondie au moins dans le passage entre les deux sections longitudinales (48a1, 48a2).

11. Unité d'amortissement de déplacement selon l'une des revendications 1 à 10, **caractérisée en ce que** l'évidement (50a) de l'élément de friction (50) est réalisé comme un évidement sensiblement cylindrique.

12. Unité d'amortissement de déplacement selon l'une des revendications 1 à 10, **caractérisée en ce que** l'évidement de l'élément de friction est réalisé de manière adaptée à la forme de l'élargissement radial de la section de prise.

13. Unité d'amortissement de déplacement selon l'une des revendications 1 à 12, **caractérisée en ce que** l'unité de déplacement relatif (34) est maintenue sur le tube de réception (32) par complémentarité de formes de manière contiguë à l'extrémité éloignée de la première section longitudinale (32d) de la deuxième section longitudinale (32e) du tube de réception (32) ou **en ce qu'**une troisième section longitudinale (132f) du tube de réception (132) est contiguë à l'extrémité éloignée de la première section longitudinale (132d) de la deuxième section longitudinale (132e) du tube de réception (132), dans laquelle l'unité de déplacement relatif (134) est maintenue par friction dans cette troisième section longitudinale (132f) du tube de réception (132).

14. Unité de ressort (22) avec une unité d'amortissement de déplacement (30) selon l'une des revendications précédentes,
pour laquelle sur l'extrémité (32b) du tube de réception (32) qui est opposée à l'extrémité (32a) du tube de réception (32) sur laquelle l'unité de déplacement relatif (34) sort du tube de réception (32), un premier élément de raccordement (24) est prévu pour le raccordement avec un premier assemblage supérieur,
pour laquelle un second élément de raccordement (26) est prévu sur l'extrémité dépassant du tube de réception (32) de l'unité de déplacement relatif (34) pour le raccordement avec un second assemblage supérieur, et
pour laquelle un ressort (28) entourant le tube de réception (32) est prévu, dont une extrémité est en appui directement ou indirectement contre le premier élément de raccordement (24) et dont une extrémité est en appui directement ou indirectement contre le second élément de raccordement (26).
